# EUROPÄISCHE PATENTANMELDUNG

(11) **EP 1 108 697 A1**
(43) Veröffentlichungstag der Anmeldung: **20.06.2001**
(21) Anmeldenummer: 99811155.3
(22) Anmeldetag: 13.12.1999
(51) Int. Cl.: C04B 28/00

(54) **Lehm-Baustoff**

(71) Anmelder: Ziegelei Oberdiessbach AG, 3672 Oberdiessbach (CH)
(72) Erfinder: Döhring, Lothar Dipl. Ing., 5317 Hettenschwil (CH); Von Gunten, Anton, 3672 Oberdiessbach (CH); Von Gunten, Erwin, 3672 Oberdiessbach (CH)
(74) Vertreter: Roshardt, Werner Alfred, Dipl.-Phys.

(57) **Zusammenfassung**

Ein hydraulisch erhärtender Baustoff auf der Basis von Lehm und Zement enthält in einem verarbeitungsfähigen, plastischen Zustand 72 - 94 Gew.% feuchten Lehm und 2 - 20 Gew.% hydraulischen Zement, wobei der Wassergehalt des feuchten Lehms 10 - 25 Gew.% beträgt. Dieser Baustoff ist ökologisch unbedenklich und preiswert. Er ist insbesondere auch zur Herstellung von Bauteilen geeignet, die in bauphysikalischer Hinsicht zeitgemässen Anforderungen genügen.

## Beschreibung

### Technisches Gebiet

Die vorliegende Erfindung betrifft einen Baustoff auf der Basis von Lehm und Zement zur Verwendung im Bauwesen.

### Stand der Technik

Ungebrannter Lehm findet seit alters her Verwendung als Baustoff für den Bau von Gebäuden, vorwiegend in regenarmen Gebieten. Gegenüber moderneren Baustoffen wie Backsteinen aus gebranntem Lehm, Beton, Glas, Metall, behandeltem Holz und verschiedenen Kunststoffen weist ungebrannter Lehm sowohl in ökologischer als auch in gesundheitlicher Hinsicht einige Vorteile auf. Lehm ist ein geologisches Endprodukt, das sich weder zersetzt noch chemisch reaktiv ist und als völlig schadstofffrei gilt. Lehm wird in verschiedenen Verfahren sogar als Heilmittel eingesetzt. Zudem ist bekannt, dass ungebrannter Lehm eine in bauhygienischer Hinsicht erwünschte bakteriostatische Wirkung besitzt und überdies aufgrund seiner Absorptionsfähigkeit verschiedene anorganische Schadstoffe und/oder organische Allergene wie Milbenextrakte, Pollen, Schimmelpilzsporen etc. zu binden und somit deren gesundheitsschädigende Wirkung zu vermindern vermag.

In bauphysikalischer Hinsicht weist ungebrannter Lehm jedoch etliche Nachteile gegenüber den heute in technisierten Ländern gebräuchlichen Baustoffen auf, wobei insbesondere die vergleichsweise geringe Festigkeit von aus ungebranntem Lehm gefertigten Bauteilen sowie die fehlende Wasserfestigkeit und die mangelnde Frostbeständigkeit derselben zu erwähnen sind.

In der Druckschrift CN 1 082 010 wird ein Ziegelstein beschrieben, der aus einer Mischung aus 70 - 80% Lehm und 20 - 30% Sulfathüttenzement (ein klinkerfreier hydraulischer Zement) hergestellt ist. Im Unterschied zu einem konventionellen Backstein ist zur Herstellung dieses Ziegelsteins kein Brennprozess erforderlich, sondern ein ungefähr 6.5 bis 8 Stunden dauerndes Dampfhärtungsverfahren. Der für das Dampfhärtungsverfahren gemäss CN 1 082 010 benötigte Energiebedarf ist zwar etwas kleiner als der Energiebedarf für einen Brennprozess zur Herstellung eines konventionellen Backsteins. Die pro Ziegelstein benötigte Energie ist jedoch immer noch beträchtlich.

Um das energie- und zeitaufwendige Dampfhärtungsverfahren abzukürzen oder gar ganz zu vermeiden wird in der Druckschrift CN 1 121 494 vorgeschlagen, einer Mischung gemäss der obengenannten Druckschrift CN 1 082 010 2.5-3% eines Früh-Festigkeitsbilders beizumischen, der die Salze Aluminiumchlorid, Ammoniumchlorid, Alkalichlorid, Erdalkalichlorid, Kalziumhydroxid, Kalziumsulfat, Magnesiumkarbonat, Natriumkarbonat und Natriumsilikat enthält. Während aufgrund der Beimischung des Früh-Festigkeitsbilders der Energiebedarf für die Herstellung von Ziegelsteinen vermindert werden kann, erweist sich der dadurch verursachte hohe Chloridgehalt als problematisch im Hinblick auf die Korrosion von Stahlarmierungen und Eisenteilen, die in Kontakt mit den Ziegelsteinen kommen oder auch nur in deren Nähe angeordnet sind. Zudem führt der hohe Gehalt an löslichen Salzen zu unerwünschten Salzausblühungen und damit verbundenen Beschädigungen im Aussenbereich der Ziegelsteine.

In der amerikanischen Patentschrift US 4 309 325 wird ein insbesondere zur Herstellung von Skulpturen geeigneter Mörtel auf der Basis von Lehm und Zement beschrieben. Um ein Erstarren des Mörtels ohne Rissbildung zu gewährleisten, weist er weiter einen polymer- und einen formaldehydhaltigen Zusatz auf, welche den Mörtel für die Anwendung als Baustoff erheblich verteuern und für den Wohnbereich wegen der gesundheitsschädlichen Wirkung von Formaldehyd ungeeignet machen.

Gemäss der veröffentlichten europäischen Patentanmeldung EP 751 267 enthält ein Baustoff auf der Basis von Lehm und/oder Zement Naturfasern wie Stroh oder Gräserhalmen zur Armierung von aus dem Baustoff gefertigten Bauteilen. Um die Fasern haltbar zu machen, werden sie mit modifizierten Bindemitteln und Katalysatoren umhüllt und konserviert. Dies ist mit erheblichen Kosten verbunden.

### Darstellung der Erfindung

Aufgabe der Erfindung ist die Angabe eines ökologisch unbedenklichen und preiswerten Baustoffes auf der Basis von Lehm und Zement, der insbesondere auch zur Herstellung von Bauteilen geeignet ist, die in bauphysikalischer Hinsicht zeitgemässen Anforderungen genügen.

Die Lösung der Aufgabe ist durch die Merkmale der unabhängigen Patentansprüche definiert. Gemäss der Erfindung enthält ein hydraulisch erhärtender Baustoff auf der Basis von Lehm und Zement in einem verarbeitungsfähigen, plastischen Zustand 72 - 94 Gew.% feuchten Lehm und 2-20 Gew.% hydraulischen Zement, wobei der Wassergehalt des feuchten Lehms 10 - 25 Gew.% (bezogen auf den Lehm) beträgt.

Unter Lehm ist ein Gemisch aus Ton, Schluff (d.h. Feinstsand) und Sand zu verstehen, das Beimengungen von grösseren Gesteinspartikeln (Kies, Gestein) sowie von organischem Material enthalten kann. Im Lehm wirkt der im Wesentlichen aus den sogenannten Tonmineralien zusammengesetzte Ton als Bindemittel. Ausserdem kommt Lehm auch mit Kalk vermischt vor, den man dann Mergel nennt. Schluff, Sand und Kies sind nur Füllstoffe.

Je nach Tonanteil spricht man von fettem Lehm (ca. zwei Drittel Tonanteil), lehmigem Ton (ca. 50% Tonanteil), tonigem Lehm (ca. ein Drittel Lehmanteil), gewöhnlichem Lehm (ca. 20% Tonanteil) und sandigem Lehm (ca. 10% Tonanteil). Sämtliche dieser Lehmtypen können als Lehm zur Herstellung des erfindungsgemässen Baustoffes verwendet werden. Zur Herstellung des erfindungsgemässen Baustoffes kann sogar ein Lehm mit einem Anteil von bloss 5 - 10 Gew.% an Tonmineralien verwendet werden.

Als Lehmkomponente für den erfindungsgemässen Baustoff ist sowohl aus natürlichen Lehmlagerstätten abgebauter Lehm als auch anderweitig gewonnener Lehm verwendbar. Insbesondere ist auch Lehm gemäss obiger Definition verwendbar, der aus bei der Kieswäsche anfallenden Abfallprodukten aufbereitet wurde.

Unter einem hydraulischen Zement wird ein im Wesentlichen aus mineralischen Stoffen zusammengesetztes Bindemittel verstanden, das unter Wasseraufnahme an Luft und selbst unter Wasser steinartig erhärtet und nach dem Aushärten wasserbeständig ist. Zur Herstellung des erfindungsgemässen Baustoffes sind unter anderem Portlandzement, Hochofenzement, Flugaschezement, Trasszement, Ölschieferzement, Tonerdeschmelzzement, Ferrarizement, Weisszement oder hydraulischer Kalk, je allein oder in Kombination miteinander, geeignet.

Der erfindungsgemässe Baustoff besteht aus den in ökologischer und bauhygienischer Hinsicht unbedenklichen und zudem preiswerten Komponenten Lehm und Zement. Der Zementanteil bewirkt ein hydraulisches Erhärten des Baustoffes. Dieser lässt sich deshalb ohne grossen Energieaufwand für Bauzwecke verwenden. Insbesondere ist zur Herstellung von Bauteilen aus dem erfindungsgemässen Baustoff weder ein Brennprozess noch ein Trocknungsprozess oder ein Dampfhärtungsverfahren erforderlich.

Ausserdem trägt der erfindungsgemässe Baustoff dem Prinzip der Nachhaltigkeit Rechnung, insofern als er einerseits als zeitgemässes, preiswertes Produkt erheblichen Nutzen bringt und andrerseits weder seine Herstellung noch seine Anwendung oder seine Entsorgung zu einem übermässigen Verbrauch an Ressourcen führen, sondern diese für künftige Generationen schonen.

Der erfindungsgemässe Baustoff ist unter anderem als plastische Masse, Mörtel, Fugenmörtel, Putz oder Kleber verwendbar. Er ist insbesondere auch als plastische Masse für die Herstellung von maschinell vorgefertigten Bauteilen, wie z.B. Bausteinen oder Verblendelementen, verwendbar. Überraschenderweise hat sich nämlich gezeigt, dass mit dem erfindungsgemässen Baustoff trotz seines vergleichsweise kleinen Zementanteils Bauteile herstellbar sind, die in bauphysikalischer Hinsicht zeitgemässen Anforderungen zu genügen vermögen. Die Verarbeitung eines plastischen Baustoffs gemäss der Erfindung zu Bauteilen kann z.B. durch Extrudieren, Pressen, Schlagpressen, Vibrationspressen, Giessen, Filterpressen, Strangpressen, Schleudern, Spritzen (Gunitieren), Injizieren, Walzen, Modellieren und/oder Beschichten erfolgen. Ein putz- oder kleberförmiger Baustoff gemäss der Erfindung kann z.B. durch Auftragen, Pumpen, Anwerfen, Spritzen, Pinseln, Rollen, Tauchen oder Taloschieren appliziert werden.

Vorzugsweise wird als Lehmkomponente zur Herstellung des erfindungsgemässen Baustoffs ein feuchter Lehm mit einem Wassergehalt von 20 Gew.% oder weniger verwendet. Es wird jedoch bevorzugt, dass der Wassergehalt des Lehms wenigstens 15 Gew.% oder mehr beträgt.

Da Lehm üblicherweise in erdfeuchtem Zustand abgebaut wird, bringt die Herstellung eines erfindungsgemässen Baustoffs aus solchem Lehm den Vorteil mit sich, dass zur Baustoffherstellung vergleichsweise wenig Energie erforderlich ist, weil keine Energie zum Trocknen des Lehms aufgewendet werden muss. Der Baustoff liegt in diesem Fall nach seiner Herstellung gleich in einem feuchten, verarbeitungsfähigen, plastischen Zustand vor, wobei wenigstens ein Teil des Wassergehalts dieses Baustoffs aus dem im feuchten Lehm enthaltenen Wasser stammt.

Gemäss einem anderen Aspekt der Erfindung ist es jedoch auch möglich, zunächst einen trockenen, pulverförmigen hydraulisch erhärtenden Baustoff auf der Basis von Lehm und Zement herzustellen. Zu diesem Zweck wird der nach dem Abbau üblicherweise feuchte Lehm zunächst getrocknet und anschliessend zu einem Pulver gemahlen. Der pulverförmige Lehm kann dann mit Zementpulver vermischt werden, um einen trockenen, pulverförmigen Baustoff gemäss der Erfindung zu erhalten. Dieser Baustoff zeichnet sich dadurch aus, dass er in einem trockenen, pulverförmigen Zustand 66 - 93 Gew.% trockenen Lehm und 2.4-22 Gew.% hydraulischen Zement enthält. Zur Herstellung eines verarbeitungsfähigen, plastischen Baustoffs gemäss der Erfindung muss diesem pulverförmigen Baustoff dann lediglich noch Wasser beigemischt werden. Im Vergleich zur Herstellung des verarbeitungsfähigen erfindungsgemässen Baustoffs direkt aus feuchtem Lehm weist die Herstellung über den Umweg eines trockenen, pulverförmigen Baustoffs gemäss der Erfindung Vorteile auf hinsichtlich des Transports und/oder der Lagerung des Baustoffs bzw. der Baustoffkomponenten. Zudem ist auch das Mischen von zwei trockenen Komponenten einfacher als das Mischen einer trockenen mit einer feuchten Komponente.

Gemäss einer bevorzugten Ausführungsart der Erfindung besteht die Zementkomponente des Baustoffs aus Portlandzement. Dieser ist als Zement für das Bauwesen weit verbreitet und zeichnet sich durch gute bauphysikalische Eigenschaften aus.

Der vergleichsweise kleine Anteil des Zements von 20 Gew.% oder weniger im erfindungsgemässen Baustoff erweist sich als besonders vorteilhaft, wenn der Baustoff zu Armierungs- und/oder Isolationszwecken weiter organische Fasern, insbesondere pflanzliche Zellulosefasern, enthält. Bei bisher bekannten Baustoffen auf der Basis von Lehm und Zement war es nämlich erforderlich, solche Fasern wie z.B. Stroh gegen Angriffe durch die Alkalien des Zements mittels besonderer Massnahmen zu schützen, wie es z.B. in der Druckschrift EP 751 267 beschrieben ist. Aufgrund zahlreicher Versuche im Zusammenhang mit der vorliegenden Erfindung hat sich nun überraschenderweise gezeigt, dass mit einer Reduktion des Zementanteils im Baustoff eine weit überproportionale Reduktion der Konzentration der im Baustoff gelösten Alkalien einhergeht. Im Falle eines aus Lehm und Zement bestehenden Baustoffs hat z.B. die Reduktion des Zementanteils von 30 Gew.% auf 10 Gew.% zu einer Reduktion der Konzentration der im Baustoff gelösten Alkalien auf weniger als 1/100 ihres ursprünglichen Wertes geführt. Der erfindungsgemässe Baustoff ermöglicht deshalb die Verwendung von Fasern zu Armierungs- und/oder Isolationszwecken, wobei auf jeglichen Schutz der Faserstoffe wie z.B. durch Imprägnierung, Hydrophobierung, Modifizierung der Bindemittel mittels Katalysatoren etc. verzichtet werden kann, selbst wenn es sich um organische Fasern, insbesondere sogar um pflanzliche Fasern, handelt.

Gemäss einer bevorzugten Erfindungsvariante beträgt der Anteil des Zementes im erfindungsgemässen Baustoff weniger als 15 Gew.%. Vorzugsweise ist er sogar kleiner als 10 Gew.%, insbesondere sogar kleiner als 7 Gew.%. Bevorzugt wird jedoch ein Zementanteil von mehr als 3 Gew.%, vorzugsweise sogar von mehr als 4 Gew.%, insbesondere sogar von mehr als 5 Gew.%.

Ein erfindungsgemässer Baustoff kann zusätzlich organische und/oder anorganische Fasern enthalten, wobei der Faseranteil 0 - 15 Gew.%, vorzugsweise 1 - 8 Gew.% betragen kann. Vorzugsweise beträgt der Faseranteil mehr als 2 Gew.%, insbesondere sogar mehr als 4 Gew.%. Dank der Beimischung von Fasern können die bauphysikalischen Eigenschaften von aus dem erfindungsgemässen Baustoff gefertigten Bauteilen verbessert werden. Insbesondere kann mittels einer Faserarmierung die Festigkeit der Bauteile erhöht und ihre Anfälligkeit auf Schwindrissbildung reduziert werden. Als Fasern für den Baustoff gemäss dieser Erfindungsvariante sind unter anderem organische Fasern wie Häcksel, Schäben von Flachs, Hülsen von Getreide- oder Grassamen, Stroh, Schilf, Chinaschilf, Gras, Nadeln, Holzhackschnitzel, Sägemehl, Sägespäne, Baumwoll-, Hanf-, Sisal-, Nessel-, Leinen-, Zellulose oder Papierfasern geeignet. Aber auch anorganische Fasern wie z.B. Glas-, keramische und/oder mineralische Fasern, Steinwolle, Magnesiumsilikate oder Kohlenstofffasern sowie Fasergemische aus verschiedenen Fasern sind für den Baustoff gemäss dieser Erfindungsvariante geeignet.

Ein erfindungsgemässer Baustoff kann weiter zusätzlich wenigstens ein Fliessmittel enthalten, wobei der Trockengehalt des Fliessmittelanteils im Baustoff 0 - 5 Gew.%, vorzugsweise 0.2 - 3 Gew.%, insbesondere 0.4 - 2 Gew.% betragen kann. Es kann ein flüssiges, ein flockenförmiges oder ein pulverförmiges Fliessmittel verwendet werden. Im Falle eines direkt aus feuchtem Lehm hergestellten erfindungsgemässen Baustoffes kann das Fliessmittel dem feuchten Lehm beigemischt werden. Der Zusatz von wenigstens einem Fliessmittel ist insbesondere zur Herstellung eines erfindungsgemässen Baustoffs in Form einer extrudierbaren plastischen Masse vorteilhaft, um ein vorzeitiges Ansteifen des Baustoffes im Extruder und/oder ein Verstopfen des Extruders zu verhindern.

Als Fliessmittel kann irgendein in der zementverarbeitenden Industrie gebräuchliches Additiv, beispielsweise ein gebräuchlicher Betonverflüssiger, verwendet werden. Vorzugsweise wird ein Fliessmittel verwendet, das die ökologischen Vorzüge des Lehms in keiner Weise beeinträchtigt. Ein geeignetes Fliessmittel kann z.B. aus der Gruppe von sulfonierten oder nicht sulfonierten Vinylcopolymeren, sulfonierten Polymeren, Gluconsäure, Ligninsulfonat, Triäthanolamin, Glycerin, Polyethylenglykol, Oleat, Polysorbitan, Weinsäure, Phosphaten, Alkyläthoxylat, Polycarboxyläther, Gelatinepulver, oxidativ hydrolisierter Gelatine, Sorbitan-Palmitat-Äthoxylat oder in Gluconsäure gelöstem Natriumaluminat ausgewählt werden. Zur Verwendung im erfindungsgemässen Baustoff gut geeignet sind Fliessmittel aus Vinyl-Polymerisaten mit Pyrrolidon-, Alkohol-, Carboxyl-, aromatischen Sulfonsäuren- bzw. Carboxyläther-Gruppen, Polycarboxylaten und Acrylaten. Ein zur Verwendung im erfindungsgemässen Baustoff geeignetes Fliessmittel auf der Basis eines Vinylpolymerisats ist z.B. ein Betonverflüssiger, der von der Firma Sika AG unter der Bezeichnung Sikament 500 vertrieben wird. Auch geeignet ist der von der Firma MBT unter der Bezeichnung Glenium 21 vertriebene Betonverflüssiger auf der Basis von Polycarboxyläther.

Gemäss einer weiteren bevorzugten Variante der Erfindung enthält der Baustoff lediglich Komponenten, die in ökologischer Hinsicht unbedenklich und frei von jeglichen im Wohnbereich toxisch wirkenden Stoffen, insbesondere formaldehydfrei, sind. Als in ökologischer Hinsicht unbedenklich werden im vorliegenden Zusammenhang diejenigen Stoffe bezeichnet, von denen bei einer Verwendung als Baustoff keine gesundheitsschädliche Wirkung bekannt ist und die ohne Probleme entsorgt und/oder wiederverwertet werden können. So gehören insbesondere ungebrannter Lehm und Zement zu den in ökologischer Hinsicht unbedenklichen Stoffen.

Ein erfindungsgemässes Verfahren zur Herstellung eines Lehm, Zement und wenigstens ein Fliessmittel enthaltenden Baustoffs zeichnet sich dadurch aus, dass in einem ersten Schritt das Fliessmittel in den feuchten Lehm zugemischt wird, in einem zweiten Schritt das Fliessmittel in einem Mischvorgang im feuchten Lehm homogen verteilt wird und danach in einem dritten Schritt der Zement zugemischt wird. Durch das erfindungsgemässe Verfahren wird verhindert, dass das Fliessmittel vorzeitig (d.h. vor seiner homogenen Verteilung im Lehm) in Kontakt mit dem konzentrierten Zement kommt. Ein solcher vorzeitiger Kontakt mit dem Zement würde in den meisten Fällen das Fliessmittel unwirksam machen.

Gemäss einem weiteren Aspekt der Erfindung ist ein Bauteil aus einem Baustoff auf der Basis von Lehm und Zement gefertigt, wobei der Baustoff aus einer Mischung hergestellt ist, die folgende Zusammensetzung aufweist:
72 - 94 Gew.% feuchter Lehm mit einem Wassergehalt von 10 - 25 Gew.%;
2 - 20 Gew.% hydraulischer Zement;
0 - 15 Gew.% organische und/oder anorganische Fasern;
0 - 5 Gew.% Fliessmittel.

Aus den nachfolgenden Ausführungsbeispielen und der Gesamtheit der Patentansprüche ergeben sich weitere vorteilhafte Ausführungsarten und Merkmalskombinationen der Erfindung.

### Wege zur Ausführung der Erfindung

### Beispiel 1

Als Beispiel für einen erfindungsgemässen Baustoff in Form einer extrudierbaren plastischen Masse kann angegeben werden:

| | |
|---|---|
| feuchter Lehm mit einem Wassergehalt von 20 Gew.% | 85 Gew.% |
| Portlandzement | 10 Gew.% |
| Strohfasern | 3.5 Gew.% |
| Fliessmittel * | 1.5 Gew.% ** |

| | |
|---|---|
| *Betonverflüssiger auf der Basis eines Vinylpolymerisats | |
| ** Trockengehalt des Fliessmittelanteils im Baustoff | |

Als Fliessmittel wird ein Betonverflüssiger auf der Basis eines Vinylpolymerisats mit stickstoff- und schwefelhaltigen Gruppen verwendet, das von der schweizerischen Firma Sika AG unter der Bezeichnung Sikament 500 vertrieben wird.

Die plastische Masse gemäss Beispiel 1 ist zur Herstellung von maschinell vorgefertigten Bauteilen in einem Extrudier- und/oder einem Strangpressverfahren geeignet.

### Beispiel 2

Ein Beispiel für einen erfindungsgemässen Baustoff in Form eines extrudierbaren Mörtels weist folgende Zusammensetzung auf:

| | |
|---|---|
| feuchter Lehm mit einem Wassergehalt von 17.7 Gew.% | 87.5 Gew.% |
| Portlandzement | 9 Gew.% |
| Strohfasern | 1.5 Gew.% |
| Fliessmittel* (30 Gew.% Trockengehalt) | 2.0 Gew.% |

| | |
|---|---|
| * Polymerisat aus gleichen molaren Mengen von Sulfanilsäure-Natriumsalz, Malein-säure-Mono-Natriumsalz und Natrium-1-ethynel-2-pyrrolidon-5-carboxylat. | |

Im Zuge von Prüfversuchen wurden Prüfkörper (Prismen mit 4x4x16 cm Kantenlänge) aus Mörtel gemäss Beispiel 2 während 28 Tagen bei Raumtemperatur gelagert. Danach wurden sie auf eine relative Gleichgewichtigkeitsfeuchte von 50% konditioniert. Die Rohdichte betrug 1880kg/m³, die Druckfestigkeit 22.8N/mm² und die Biegezugfestigkeit 7.0 N/mm². Nach 5 zusätzlichen Frost/Tau-Wechseln bei 100% Wassersättigung und anschliessender Konditionierung auf eine relative Gleichgewichtigkeitsfeuchte von wiederum 50% betrug die Druckfestigkeit 21.8 N/mm² und die Biegezugfestigkeit 7.3 N/mm².

### Beispiel 3

Ein Putz gemäss einer bevorzugten Ausführungsart der Erfindung weist folgende Zusammensetzung auf:

| | |
|---|---|
| trockener Lehm * | 68 Gew.% |
| Portlandzement | 10 Gew.% |
| Fliessmittel** | 1.5 Gew.% |
| Wasser | 20.5 Gew.% |

| | |
|---|---|
| * Lehm, auf über 98 Gew.% getrocknet und pulverisiert, aufweisend 41 Gew.% Anteil Sand mit 0.1 - 0.3 mm Durchmesser und 10 Gew.% Sand mit 1.6 - 2.2 mm Durchmesser | |
| **Polyvinylpyrrolidon-Pulver mit einem mittleren Molekulargewicht von 7 - 1 Kilo-Dalton (gemessen mittels Gelchromatographie GPC) | |

Bei der Anwendung als Putz werden die festen Komponenten des Baustoffs gemäss Beispiel 3 (d.h. ohne Wasseranteil) in Säcke abgefüllt und vorgemischt. Vor dem Gebrauch wird das Wasser beigemischt.

### Beispiel 4

Die Rezeptur für einen Kleber gemäss einer bevorzugten Ausführungsart der Erfindung sieht folgendermassen aus:

| | |
|---|---|
| trockener Lehm * | 65 Gew.% |
| Portlandzement | 10 Gew.% |
| Fliessmittel ** | 1.5 Gew.% |
| Wasser | 23.5 Gew.% |

| | |
|---|---|
| * Lehm, auf über 98 Gew.% getrocknet und pulverisiert | |
| **Polyvinylpyrrolidon-Pulver mit einem mittleren Molekulargewicht von 7 - 11 Kilo-Dalton (gemessen mittels Gelchromatographie GPC) | |

Bei der Anwendung als Kleber werden die festen Komponenten des Baustoffs gemäss Beispiel 4 (d.h. ohne Wasseranteil) in Säcke abgefüllt und vorgemischt. Vor dem Gebrauch wird das Wasser beigemischt.

Wenn beim Baustoff gemäss Beispiel 4 der Wasseranteil reduziert wird, kann er als Fugenmörtel und/oder als Spachtelmasse verwendet werden.

Für sämtliche der angegebenen Beispiele 1 bis 4 wurde ein Portlandzement mit einer spezifischen Oberfläche nach Blaine von 3290 cm²/g und folgender mineralogischer Zusammensetzung nach Bogue verwendet:

| | |
|---|---|
| C₃S | 51.1% |
| C₂S | 16.1% |
| C₃A | 11.8% |
| C₄AF | 6.5% |
| CaSO₄ | 5.4% |

Zusammenfassend ist festzustellen, dass durch die Erfindung ein ökologisch unbedenklicher und preiswerter Baustoff auf der Basis von Lehm und Zement angegeben wird, der insbesondere auch zur Herstellung von Bauteilen geeignet ist, die in bauphysikalischer Hinsicht zeitgemässen Anforderungen genügen.

## Patentansprüche

1. Hydraulisch erhärtender Baustoff auf der Basis von Lehm und Zement, dadurch gekennzeichnet, dass er in einem verarbeitungsfähigen, plastischen Zustand 72 - 94 Gew.% feuchten Lehm und 2 - 20 Gew.% hydraulischen Zement enthält, wobei der Wassergehalt des feuchten Lehms 10 - 25 Gew.% beträgt.

2. Baustoff nach Anspruch 1, dadurch gekennzeichnet, dass der Wassergehalt des feuchten Lehms 15 - 20 Gew.% beträgt.

3. Hydraulisch erhärtender Baustoff auf der Basis von Lehm und Zement insbesondere nach Anspruch 1 oder 2, dadurch gekennzeichnet, dass er in einem trockenen, pulverförmigen Zustand 66 - 93 Gew.% trockenen Lehm und 2.4 - 22 Gew.% hydraulischen Zement enthält.

4. Baustoff nach einem der Ansprüche 1 bis 3, dadurch gekennzeichnet, dass der Zement ein Portlandzement ist.

5. Baustoff nach einem der Ansprüche 1 bis 4, dadurch gekennzeichnet, dass der Zementanteil kleiner als 15 Gew.%, vorzugsweise kleiner als 10 Gew.%, insbesondere sogar kleiner als 7 Gew.% ist.

6. Baustoff nach einem der Ansprüche 1 bis 5, dadurch gekennzeichnet, dass er zusätzlich organische und/oder anorganische Fasern enthält, wobei der Faseranteil 0 - 15 Gew.%, vorzugsweise 1 - 8 Gew.% beträgt.

7. Baustoff nach einem der Ansprüche 1 bis 6, dadurch gekennzeichnet, dass er zusätzlich wenigstens ein Fliessmittel enthält, wobei der Trockengehalt des Fliessmittelanteils im Baustoff 0 - 5 Gew.%, vorzugsweise 0.2 - 3 Gew.%, insbesondere 0.4 - 2 Gew.% beträgt.

8. Baustoff nach Anspruch 7, dadurch gekennzeichnet, dass das Fliessmittel ein Betonverflüssiger ist.

9. Baustoff nach Anspruch 8, dadurch gekennzeichnet, dass das Fliessmittel ein Betonverflüssiger auf der Basis eines Vinylpolymerisats oder eines Polycarboxyläthers ist.

10. Baustoff nach einem der Ansprüche 1 bis 9, dadurch gekennzeichnet, dass er lediglich Komponenten enthält, die in ökologischer Hinsicht unbedenklich sind, und dass er insbesondere frei von jeglichen im Wohnbereich toxisch wirkenden Stoffen, wie z.B. Formaldehyd, ist.

11. Verfahren zur Herstellung eines Baustoffes nach einem der Ansprüche 7 bis 10, dadurch gekennzeichnet, dass in einem ersten Schritt das Fliessmittel in den feuchten Lehm zugemischt wird, in einem zweiten Schritt das Fliessmittel in einem Mischvorgang im feuchten Lehm homogen verteilt wird, wonach in einem dritten Schritt der Zement zugemischt wird.

12. Bauteil aus einem Baustoff auf der Basis von Lehm und Zement insbesondere nach einem der Ansprüche 1 bis 10, dadurch gekennzeichnet, das der Baustoff aus einer Mischung hergestellt ist, die folgende Zusammensetzung aufweist:
72 - 94 Gew.% feuchter Lehm mit einem Wassergehalt von 10 - 25 Gew.%;
2 - 20 Gew.% hydraulischer Zement;
0 - 15 Gew.% organische und/oder anorganische Fasern;
0 - 5 Gew.% Fliessmittel.
